# EUROPÄISCHE PATENTSCHRIFT

(11) **EP 3 045 027 B1**
(45) Veröffentlichungstag und Bekanntmachung des Hinweises auf die Patenterteilung: **27.02.2019**
(21) Anmeldenummer: 16401001.9
(22) Anmeldetag: 04.01.2016
(51) Int. Cl.: A01B 23/02

(54) **BODENBEARBEITUNGSSCHAR**
SOIL PROCESSING SHEARS
SOC DE PRÉPARATION DE SOL

(30) Priorität: 15.01.2015 DE 102015100554
(43) Veröffentlichungstag der Anmeldung: 20.07.2016
(73) Patentinhaber: Amazonen-Werke H. Dreyer GmbH & Co. KG, 49205 Hasbergen (DE)
(72) Erfinder: Scherf, Silvio, 39444 Hecklingen OT Cochstedt (DE); Polster, Joachim, 04229 Leipzig (DE)

(56) Entgegenhaltungen:
- DE-A1- 3 628 910
- DE-A1-102012 111 138
- GB-A- 624 944
- US-A- 1 805 481
- US-A- 2 254 011
- US-A- 4 976 566

## Beschreibung

Die Erfindung betrifft ein Bodenbearbeitungsschar gemäß des Oberbegriffes des Patentanspruches 1.

Ein derartiges Bodenbearbeitungsschar ist in der DE 10 2012 111 138 A1 beschrieben. Dieses Bodenbearbeitungswerkzeug ist als Grubberschar ausgebildet. Dieses Grubberschar weist eine Scharspitze und eine sich daran anschließende Führungsplatte auf. Das Grubberschar wird mit mindestens einer Schraube an einem Werkzeughalter befestigt. Die Scharspitze weist an ihrem oberen, hinteren Ende eine Aussparung auf. In diese Aussparung fasst ein Ansatz des unteren Endes der in sich gewundenen Führungsplatte formschlüssig ein. Die Führungsplatte ist mit zumindest einer Schraube an dem Werkzeughalter befestist .Hierdurch wird eine sichere seitliche Führung und Fixierung des Grubberschares, gegenüber der Führungsplatte erreicht. Jedoch ist die Führungsplatte am oberen Ende nicht am Werkzeughalter festgelegten und an diesem oberen Ende nicht seitlich geführt.

Der Erfindung liegt die Aufgabe zu Grunde, eine vereinfachte seitliche Führung des oberen Bereiches der Führungsplatte an dem Werkzeughalter zu erreichen.

Diese Aufgabe wird erfindungsgemäß durch die Merkmale des Kennzeichens des Anspruches 1 erreicht

Infolge dieser Maßnahme wird der Fixierungsbereich der Führungsplatte gegenüber dem Werkzeughalter in einfacher Weise in die Rückseite der Führungsplatte integriert. Die Kontur des Werkzeughalters, dessen Bereich mit der Rückseite der Führungsplatte in Berührung steht, wird in die Rückseite der Führungsplatte eingeformt.

Führungsplatten legt sich der eckige Randbereich des Werkzeughalters in den in die Rückseite der Führungsplatte durch die Kerbe geschaffenen vertieften Bereich.

Eine einfache Anordnung der Kerbe in der rückwärtigen Seite der Führungsplatte lässt sich dadurch verwirklichen, dass die Kerbe in die rückwertige Seite der Führungsplatte eingeschmiedet ist. Somit wird die Kerbe in dem Schmiedevorgang zur Schaffung der Form der Führungsschwäche in einem Arbeitsgang gleich mit geschaffen.

Eine einfache Ausgestaltung der Kerbe, die in formschlüssiger Verbindung mit dem eckigen Randbereich steht, wird dadurch erreicht, dass die Kerbe in den oberen rückwertigen Seite der Führungsplatte angeordnet ist, dass die Kerbe sich nach oben erweitert und frei an dem oberen Ende der Führungsplatte ausläuft.

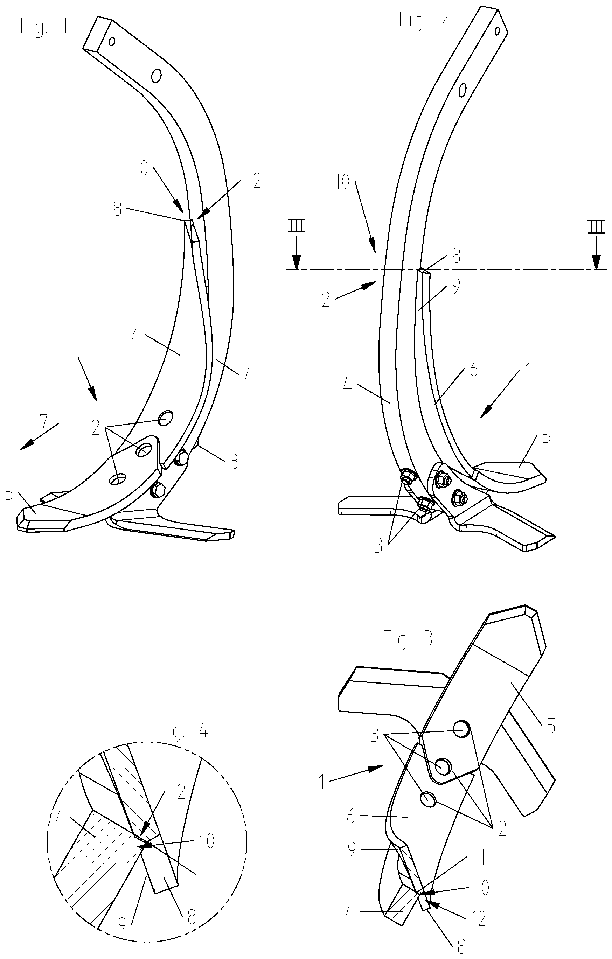

Weitere Einzelheiten der Erfindung sind der Beispielsbeschreibung und den Zeichnungen zu entnehmen. Die Zeichnungen zeigen
- Fig.1: das erfindungsgemäße Bodenbearbeitungswerkzeug in perspektivischer Darstellung von schräg vorn,
- Fig.2: das Bodenbearbeitungswerkzeug in perspektivischer Darstellung von schräg hinten,
- Fig.3: das Bodenbearbeitungswerkzeug in der Ansicht III - III
- Fig.4: die Zuordnung des Werkzeughalters zu dem oberen Bereich der Führungsplatte in der Darstellung gemäß Fig.3, jedoch in Teilansicht und vergrößertem Maßstab und
- Fig.5: die Führungsplatte in perspektivischer Darstellung von schräg hinten.

Das als Grubberschar 1 ausgebildete Bodenbearbeitungswerkzeug für eine landwirtschaftliche Maschine ist mittels der durch die in dem Bodenbearbeitungswerkzeug 1 angeordneten Durchbrüche 2 zu steckenden Befestigungsmittel, beispielsweise Schrauben 3 in nicht dargestellter Weise an einem Werkzeughalter 4 befestigt. Das Bodenbearbeitungswerkzeug 1 weist einen vorderen zinkenartigen Bereich 5 auf, an dem sich eine Führungsplatte 6, welche, wie im Ausführungsbeispiel dargestellt, in sich verwunden ausgestaltet ist, anschließt. Die Führungsplatte 6 weist eine im Wesentlichen konkave Fläche in Fahrtrichtung 7 weisend auf.

An dem oberen Endabschnitt 8 der Führungsplatte 6 befindet sich auf deren rückwärtiger Seite 9 ein Anlageelement 10 zur Anlage an dem Werkzeughalter 4. Das Anlageelement 10 ist in der rückwärtigen Seite 9 der Führungsplatte 6 als Kerbe 11 ausgebildet. Die Kerbe 11 weist eine zumindest annähernd an die Kontur des Werkzeughalters 4 im Anlagebereich 12 der in der rückwärtigen Seite 9 der Führungsplatte 6 angebrachten Kerbe 11 ausgestaltete Form auf.

Die Kerbe 11 ist in die rückwertige Seite der Führungsplatte 6 eingeschmiedet.

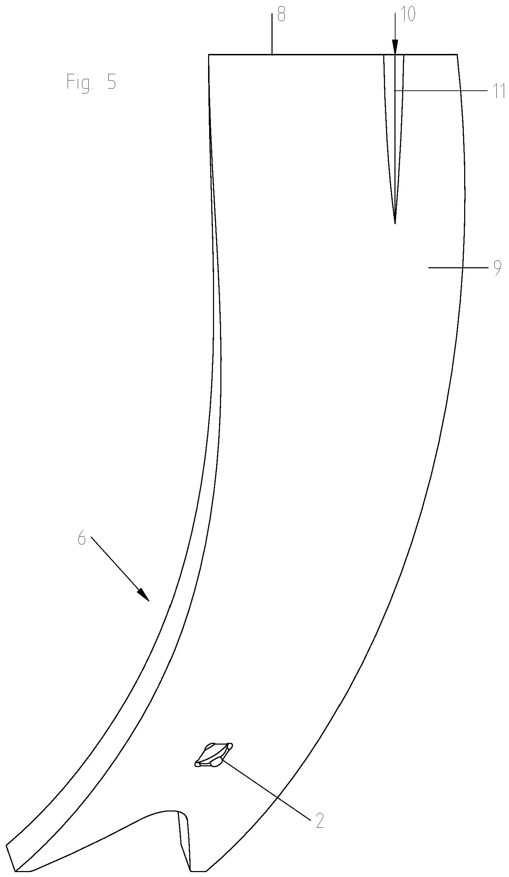

Die Kerbe 11 ist in der oberen rückwertigen Seite 9 der Führungsplatte 6 angeordnet. Die Kerbe 11 erweitert sich nach oben und läuft frei an dem oberen Ende 8 der Führungsplatte 6, wie die Fig.5 zeigt.

## Patentansprüche

1. Bodenbearbeitungsschar, insbesondere Grubberschar (1) mit einer sich an die Scharspitze anschließenden Führungsplatte (6), wobei die Scharspitze und/oder die Führungsplatte (6) mindestens ein Loch (2) umfasst, das ein Befestigungselement (3) zum Befestigen an einem Werkzeughalter (4) aufnehmen soll, wobei die Führungsplatte (6) eine im wesentlichen konkave Fläche in Fahrtrichtung (7) aufweist und in sich verwunden ausgestaltet ist, wobei sich an dem oberen Endabschnitt (8) auf der rückwärtigen Seite der Führungsplatte (6) ein Anlageelement (10) zur Anlage an dem Werkzeughalter (4) befindet, **dadurch gekennzeichnet, dass** das Anlageelement (10) in dem oberen Bereich der rückwärtigen Seite (9) der verwundenen Führungsplatte (6) als Kerbe (11) ausgebildet ist und eine zumindest annähernd an die Kontur des Werkzeughalters (4) im Anlagebereich der in der rückwärtigen Seite (9) der Führungsplatte (6) angebrachten Kerbe (11) ausgestaltete Form aufweist.

2. Bodenbearbeitungsgerät nach Anspruch 1, **dadurch gekennzeichnet, dass** die Kerbe (11) in die rückwertige Seite (9) der Führungsplatte (6) eingeschmiedet ist.

3. Bodenbearbeitungsgerät nach Anspruch 1, **dadurch gekennzeichnet, dass** die Kerbe (11) in den oberen rückwertigen Seite (9) der Führungsplatte (6) angeordnet ist, dass die Kerbe (11) sich nach oben erweitert und frei an dem oberen Ende (8) der Führungsplatte (6) ausläuft.

## Claims

1. Soil-tilling blade, in particular cultivator blade (1), having a guide plate (6) adjoining the blade tip, wherein the blade tip and/or the guide plate (6) comprise/comprises at least one hole (2), which is intended to accommodate a fastening element (3) for fastening on a tool holder (4), wherein the guide plate (6) has an essentially concave surface in the direction of travel (7) and is of twisted configuration, wherein an abutment element (10) for butting against the tool holder (4) is located on the upper end portion (8) on the rear side of the guide plate (6), **characterized in that** the abutment element (10) in the upper region of the rear side (9) of the twisted guide plate (6) is designed in the form of a notch (11) and is of a shape which is adapted at least more or less to the contour of the tool holder (4) in the abutment region of the notch (11) which is provided in the rear side (9) of the guide plate (6) .

2. Soil-tilling implement according to Claim 1, **characterized in that** the notch (11) is forged into the rear side (9) of the guide plate (6).

3. Soil-tilling implement according to Claim 1, **characterized in that** the notch (11) is arranged in the upper rear side (9) of the guide plate (6), and **in that** the notch (11) widens upwards and terminates freely at the upper end (8) of the guide plate (6).

## Revendications

1. Soc de préparation du sol, en particulier soc de cultivateur (1), comprenant une plaque de guidage (6) se raccordant à la pointe du soc, la pointe du soc et/ou la plaque de guidage (6) comprenant au moins un trou (2) qui doit recevoir un élément de fixation (3) pour la fixation à un porte-outil (4), la plaque de guidage (6) présentant une surface essentiellement concave dans la direction de conduite (7) et étant configurée en soi de manière tordue, un élément d'appui (10) destiné à s'appuyer contre le porte-outil (4) se trouvant au niveau de la portion d'extrémité supérieure (8) sur le côté arrière de la plaque de guidage (6), **caractérisé en ce que** l'élément d'appui (10) est réalisé dans la région supérieure du côté arrière (9) de la plaque de guidage tordue (6) sous forme d'encoche (11) et présente une forme réalisée au moins approximativement au niveau du contour du porte-outil (4) dans la région d'appui de l'encoche (11) réalisée dans le côté arrière (9) de la plaque de guidage (6).

2. Appareil de traitement du sol selon la revendication 1, **caractérisé en ce que** l'encoche (11) est forgée dans le côté arrière (9) de la plaque de guidage (6).

3. Appareil de traitement du sol selon la revendication 1, **caractérisé en ce que** l'encoche (11) est disposée dans le côté arrière supérieur (9) de la plaque de guidage (6), **en ce que** l'encoche (11) s'élargit vers le haut et se termine librement au niveau de l'extrémité supérieure (8) de la plaque de guidage (6).
